# FASCICULE DE BREVET EUROPEEN

(11) **EP 0 691 935 B1**
(45) Date de publication et mention de la délivrance du brevet: **18.12.1996**
(21) Numéro de dépôt: 94911216.3
(22) Date de dépôt: 24.03.1994
(51) Int. Cl.: C01G 9/02, H01C 7/10

(54) **POUDRE D'OXYDE DE ZINC DOPE, PROCEDE DE FABRICATION ET CERAMIQUE OBTENUE A PARTIR DE LADITE POUDRE**
DOTIERTES ZINKOXIDPULVER, SEINE HERSTELLUNG UND KERAMIK HIERAUS HERGESTELLT
DOPED ZINC OXIDE POWDER, PREPARATION THEREOF AND CERAMIC PRODUCED THEREFROM

(30) Priorité: 01.04.1993 FR 9303956
(43) Date de publication de la demande: 17.01.1996
(73) Titulaire: PHARMACIE CENTRALE DE FRANCE, 07800 La Voulte-sur-Rhône (FR)
(72) Inventeur: MORY, Jean-Eudes, F-26400 Crest (FR); GUY, Isabelle, 3, impasse des Clarines F-31400 Toulouse (FR); SCHNEIDER, Didier, F-26120 Malissard (FR); ROUSSET, Abel, F-31520 Ramonville (FR); LEGROS, Renée, F-31320 Pechabou (FR); PEIGNEY, Alain, F-31320 Pechabou (FR)
(74) Mandataire: Cabinet BARRE LAFORGUE & associés
(86) Numéro de dépôt international: FR9400329
(87) Numéro de publication internationale: WO9422765

(56) Documents cités:
- EP-A- 0 482 444
- WO-A-92/01631
- DATABASE WPI Derwent Publications Ltd., London, GB; AN 91-106962 & JP,A,3 050 119 (MITSUBISHI METAL)
- DATABASE WPI Derwent Publications Ltd., London, GB; AN 88-317123 & JP,A,63 231 907 (NIKKI KK) 28 Septembre 1988
- DATABASE WPI Derwent Publications Ltd., London, GB; AN 91-106962 & JP,A,3 050 119
- DATABASE WPI Derwent Publications Ltd., London, GB; AN 88-317123 & JP,A,63 231 907

## Description

L'invention concerne un procédé de fabrication de nouvelles poudres d'oxyde de zinc dopé ayant une aptitude au compactage et au frittage non obtenue jusqu'à ce jour ; elle s'étend aux poudres obtenues et aux céramiques fabriquées à partir de celles-ci.

Les poudres d'oxyde de zinc dopé par des éléments métalliques ou semi-métalliques tels que bismuth, cobalt, manganèse, antimoine, nickel, chrome, étain, aluminium, titane... présentent un intérêt considérable dans l'industrie, en particulier parce qu'elles sont à la base de la fabrication de certains composants électroniques tels que les varistances. Le bismuth est un dopant indispensable qui se retrouve dans la grande majorité de ces poudres pour donner aux composants ses propriétés électriques et favoriser l'opération de frittage. Les propriétés électriques des varistances dépendent notamment de la répartition des éléments dopants, de la morphologie des particules de la poudre d'oxyde de zinc utilisée et de la composition des joints de grains dans la céramique. Il est donc essentiel pour adapter ces propriétés à l'application envisagée et garantir leur reproductibilité, de pouvoir contrôler la morphologie des particules et l'uniformité de la répartition des éléments dopants.

De façon traditionnelle, les poudres d'oxyde de zinc dopé sont fabriquées en préparant séparément les oxydes des différents éléments en présence (oxyde de zinc, oxyde de bismuth et oxyde de chacun des autres dopants) par calcination du sel ou de l'hydroxyde correspondant, puis en mélangeant ces oxydes par un procédé mécanique (brevets US-A-4.405.508, US-A-4.165.351). Toutefois, un tel procédé conduit à un mélange d'oxydes d'homogénéité aléatoire, très difficile à obtenir à l'identique de façon reproductible quelles que soient les précautions prises ; en outre, la réalisation de ce mélange implique un broyage préalable et ce processus ne permet aucun contrôle ni aucun choix de la morphologie des particules en présence (taille, forme, texture) ; au surplus, l'opération de broyage introduit des pollutions inévitables et les produits obtenus sont relativement impurs. Le brevet US 4.540.971 décrit un procédé du type précédent mais dans lequel les oxydes sont préalablement préparés avec une granulométrie contrôlée (submicronique) avant d'être mélangés, ce qui supprime les défauts inhérents au broyage mais laisse subsister l'hétérogénéité du mélange d'oxydes.

Le brevet US-A-5 039 452 décrit un procédé dans lequel l'oxyde de zinc est mélangé sous forme de suspension aqueuse à des précurseurs des oxydes des différents dopants en solution aqueuse ; l'addition d'un agent précipitant transforme ces précurseurs en oxydes qui précipitent ainsi en présence de l'oxyde de zinc déjà existant. Ce procédé conduit comme précédemment à un mélange d'oxydes (obtenu non plus par voie mécanique mais par l'intermédiaire d'une solution liquide). Toutefois, comme précédemment, il est difficile d'obtenir avec ce procédé un bon contrôle de morphologie des poudres et une homogénéité satisfaisante à l'égard de tous les éléments.

Par ailleurs, le brevet US-A-4.681.717, le brevet EP-A-0.272.964 et le brevet EP-A-0 482 444 évoquent un procédé de fabrication consistant à réaliser des hydroxydes de zinc et des hydroxydes des dopants, à les précipiter ensemble et à les convertir en oxydes par un traitement thermique ; le brevet US indique qu'il est possible de réaliser une étape supplémentaire de transformation des hydroxydes en oxalates avant le traitement thermique. Dans ce procédé, c'est donc au niveau des hydroxydes ou des oxalates des divers éléments que le mélange est effectué (mélange de précurseurs de chacun des oxydes), avant de le soumettre au traitement thermique conduisant aux oxydes. Le bismuth qui est un élément ayant des propriétés et une taille très différentes des autres dopants (atome beaucoup plus gros) doit être traité séparément dans ce procédé américain : après sa préparation, le mélange d'oxydes de zinc dopé est imprégné par une solution de bismuth, puis l'ensemble est calciné. Dans ces conditions, les défauts afférents a la mauvaise homogénéité des poudres obtenues et a l'impossibilité de contrôler leur morphologie subsistent dans ce procédé, en particulier lorsqu'un des éléments de dopage est constitué par du bismuth, ce qui est le cas le plus fréquent. De plus, les surfaces spécifiques des poudres fabriquées par ces procédés sont généralement peu élevées, ce qui en limite les applications. Les mêmes commentaires peuvent être formulés au sujet du brevet DD 271.769 qui vise une technique analogue mais dans laquelle l'hydroxyde est remplacé par du carbonate de zinc.

Ainsi, les procédés de l'art antérieur susévoqués ne permettent pas de réaliser des poudres d'oxyde de zinc dopé qui soient homogènes a l'égard de tous les éléments en présence et présentent une morphologie contrôlable.

Le brevet FR-A-2.665.156 décrit un procédé de fabrication de poudre d'oxyde de zinc dopé, qui écarte les défauts des procédés connus sus-évoqués. Dans ce procédé, la poudre est obtenue par précipitation d'un précurseur monophasé constitué par un carbonate mixte monophasé dans lequel les éléments (zinc, éléments dopants) sont combinés a l'échelle atomique et se retrouvent ensuite avec la même morphologie dans l'oxyde final. On a pu constater qu'il était ainsi possible d'obtenir une bonne homogénéité de la répartition des éléments, tant sur le plan de la composition que sur celui de la morphologie (qui peut être contrôlé en jouant sur les conditions de la précipitation du carbonate mixte). Dans ces conditions, de telles poudres permettent de réaliser par frittage des céramiques bénéficiant d'une répartition homogène des éléments dopants.

Dans la suite, "la densification" d'une poudre après compactage ou frittage est définie selon la norme comme le rapport de la densité réelle mesurée du produit compacté ou fritté a la densité théorique de l'oxyde de zinc (5, 6).

Les poudres d'oxyde de zinc dopé obtenues par les procédés connus présentent une courbe de densification dont le maximum correspond à une température élevée. En conséquence, une bonne densification exige généralement une température de frittage relativement élevée Dans la plupart des applications, et en particulier dans le cas de varistances céramiques, une densification maximale est recherchée, de sorte que les températures de frittage des procédés industriels sont actuellement de l'ordre de 1 200° C à 1 300° C.

La présente invention a pour objet une nouvelle poudre d'oxyde de zinc dopé, qui présente les mêmes avantages que celle visée dans le brevet FR-A-2 665 156 (homogénéité, morphologie contrôlée) mais qui se caractérise par une aptitude au compactage à froid et par un facteur densification/température de frittage considérablement améliorés par rapport à ceux des poudres obtenues dans ce brevet antérieur. Un autre objectif de l'invention est d'associer à l'avantage précédent, l'obtention de surfaces spécifiques élevées.

La poudre d'oxyde de zinc dopé, visée par l'invention, est constituée par un oxyde de zinc dopé au bismuth et comportant éventuellement un ou plusieurs autres dopants métalliques ou semi-métalliques et se caractérise par une surface spécifique comprise entre 5 m²/g et 45 m²/g et par une densification au moins égale à 90 % pour des températures de frittage comprises entre 950° C et 1 000° C.

Le procédé de fabrication visé par l'invention est du type de celui visé dans le brevet FR-A-2 665 156 sus-évoqué, consistant à précipiter un précurseur mixte monophasé dans lequel tous les éléments (zinc, bismuth, autres éléments dopants) sont combinés à l'échelle atomique (par opposition aux autres procédés où des précurseurs de ces divers éléments sont mélangés sous une forme polyphasée) ; ce procédé comprend les opérations suivantes : (a) on prépare au moyen d'un solvant, une solution d'un sel de zinc soluble dans ledit solvant et on ajoute à ladite solution un sel ou un hydroxyde de bismuth et, le cas échéant, un sel ou un hydroxyde d'un ou plusieurs autres éléments de dopage métalliques ou semi-métalliques, en proportion relative minoritaire par rapport au zinc, (b) on prépare au moins une solution aqueuse contenant un agent précipitant, avec le cas échéant un ou des éléments de dopage métalliques ou semi-métalliques, (c) on mélange les solutions préparées aux opérations (a) et (b) en vue d'engendrer une précipitation, (d) on sépare le précipité de la phase liquide, (e) et on décompose ledit précipité par un traitement thermique ; selon le procédé de la présente invention, (b) on utilise comme solution d'agent précipitant, une solution contenant des ions oxalates, formiates, citrates, acétates ou tartrates, en vue d'engendrer lors du mélange (c) la précipitation d'un précurseur constitué par un oxalate, formiate, citrate, acétate, ou tartrate mixte monophasé de zinc et de dopants, de formule générale Zn_{(n-x-y)}Biₓ D_{y} Rm , zH₂O , dans lequel des atomes de bismuth Bi et éventuellement d'autres dopants D sont substitués à des atomes de zinc Zn, R étant un radical oxalate, formiate, citrate, acétate ou tartrate, n et m des entiers, et x et y des nombres petits devant n et m, (e) on réalise le traitement thermique de l'oxalate, formiate, citrate, acétate, ou tartrate mixte monophasé de zinc dans des conditions appropriées pour obtenir un oxyde de zinc dopé, de morphologie semblable à celle du précurseur mixte monophasé.

Le terme "substitué" doit être entendu au sens large et recouvre aussi bien une substitution localisée sur un site cristallographique déterminé qu'une insertion dans le réseau cristallin ou qu'une adsorption sur ce réseau.

Ainsi, dans la présente invention, l'oxyde de zinc dopé est obtenu à partir d'un précurseur monophasé constitué par un oxalate, formiate, citrate, acétate, ou tartrate mixte (à la place du carbonate mixte du procédé antérieur). Dans ce précurseur, les éléments (zinc, bismuth et autres éléments dopants) sont combinés à l'échelle atomique et se retrouvent ensuite sous la même morphologie dans l'oxyde final : on obtient de la sorte une homogénéité parfaite des éléments (homogénéité à l'échelle moléculaire), tant sur le plan de la composition que sur celui de la morphologie. De plus, le contrôle des conditions de précipitation du précurseur monophasé permet un choix de la morphologie de celui-ci (forme, taille, texture) ; un traitement thermique approprié de ce précurseur permet ensuite de conserver cette morphologie et ainsi d'obtenir la morphologie désirée pour les poudres. En outre, on a pu constater de façon inattendue que les poudres obtenues présentaient, à la fois, une surface spécifique élevée et une remarquable aptitude à se compacter pour fournir un produit de densité notablement accrue par rapport aux poudres obtenues par mise en oeuvre du procédé antérieur. Ces poudres peuvent être compactées à froid après ajout d'un liant notamment organique et conduire à des céramiques crues bénéficiant d'une excellente cohésion, se caractérisant par une densification de l'ordre de 50 % à 70 %. Elles peuvent également être compactées et frittées à des températures comprises entre 740° C et 1 000° C pour conduire à des céramiques de densification au moins égale à 90 %.

Les poudres visées par l'invention sont généralement constituées de particules isotropes, qui peuvent présenter une forme polyédrique, de diamètre équivalent moyen D₅₀ compris entre 0,4 et 20 micromètres, chaque particule étant constituée de grains primaires de taille comprise entre 0,01 et 0,3 micromètre.

Les performances des poudres visées par l'invention proviennent d'une faible agglomération des particules entre elles (bonne fluidité de la poudre) et d'une aptitude importante à l'écrasement lors du compactage. En outre, la présence d'une phase riche en bismuth à l'intérieur même des particules conduit lors du frittage à l'apparition d'un liquide dans la particule produisant un réarrangement direct entre grains primaires : les pores de taille micronique subsistant entre les particules sont ainsi éliminés.

Selon un mode de mise en oeuvre préféré du procédé de l'invention, le précurseur mixte utilisé est un oxalate mixte monophasé, de formule générale Zn _{(1-x-y)} Biₓ D_{y} C₂ O₄, zH₂O ; le procédé est alors mis en oeuvre dans les conditions suivantes : (a) on prépare une solution aqueuse ou alcoolique de sel de zinc soluble de concentration molaire comprise entre 2 et 6 moles/litre, (b) on prépare au moins une solution aqueuse contenant des ions oxalates en vue d'engendrer lors du mélange (c) la précipitation de l'oxalate mixte monophasé. La solution d'oxalate est maintenue à une température comprise entre 20° C et 80° C avant de la mélanger à la solution de sel de zinc. Le mélange de cette solution d'oxalate à la solution contenant les éléments métalliques ou semi-métalliques (sous forme de sel ou d'hydroxyde) est avantageusement effectué dans des conditions proches des conditions stoechiométriques de façon que le nombre d'ions oxalates soit sensiblement égal à la somme des ions métalliques ou semi-métalliques.

Selon un mode de mise en oeuvre conduisant à une poudre présentant une aptitude encore accrue à la densification par frittage, (b) on prépare deux solutions d'oxalate de concentration comprise entre 0,1 et 1 mole par litre, (c) on mélange la solution de sel de zinc en l'ajoutant d'abord à une des solutions d'oxalate, dite première solution, puis après agitation, on ajoute l'autre solution d'oxalate, dite seconde solution, en maintenant la température du mélange à une valeur comprise entre 20° C et 60° C. La seconde solution peut être préparée à chaud de façon à augmenter sa concentration (en particulier 0,5 à 1 mole par litre) ; la première solution est préférentiellement préparée à température ambiante, sa concentration étant plus réduite (0,1 à 0,25 mole par litre). Le premier mélange engendre une précipitation plus lente qui conduit à la formation d'un grand nombre de germes et favorise lors du second mélange l'obtention de particules de diamètre plus réduit de l'ordre de 1 à 5 micromètres (diamètre équivalent moyen D₅₀). Les conditions opératoires peuvent en particulier être les suivantes : l'on verse rapidement la solution de sel de zinc dans la première solution d'oxalate, on agite le mélange pendant une durée comprise entre 15 et 120 secondes, on verse rapidement la seconde solution d'oxalate, et on agite le nouveau mélange entre 10 et 60 minutes en le maintenant à une température comprise entre 20° C et 60° C.

De préférence, on utilise une ou des solutions d'oxalate d'ammonium ; cet oxalate est en effet très soluble dans l'eau et les ions ammonium, entraînés dans la phase liquide, s'éliminent très facilement lors de l'étape de séparation. Cette séparation du précipité est en particulier effectuée par simple filtration, suivie d'un ou plusieurs lavages à l'eau.

La solution de sel de zinc est de préférence une solution aqueuse de chlorure de zinc ou de nitrate de zinc, en raison de la solubilité de ces sels, de leur facilité de manipulation et de leur disponibilité sur le marché à des coûts réduits.

Le traitement thermique de décomposition de l'oxalate mixte est avantageusement mis en oeuvre en chauffant lentement l'oxalate mixte avec une vitesse de montée en température au plus égale à 100° C/heure pour amener le produit à une température comprise entre 380° C et 710° C, cette température étant maintenue pendant une durée comprise entre 0,5 et 20 heures.

On constate que la décomposition de l'oxalate s'effectue en deux étapes : l'une qui se déroule vers 100°-140° C correspondant à la perte de l'eau de cristallisation de l'oxalate, l'autre correspondant à la décomposition proprement dite (perte de CO et CO₂) qui commence à 330° C environ. Lorsque la perte totale en masse est de 57 % environ, la décomposition est achevée.

L'invention s'étend aux céramiques réalisées par compactage ou par compactage et frittage des poudres sus-définies, les céramiques frittées permettant en particulier de fabriquer des varistances.

Le procédé et les poudres conformes à l'invention sont illustrés par les exemples de mises en oeuvre qui suivent en référence aux dessins annexés ; sur ces dessins :
- les figures 1, 2 et 3 sont des diagrammes comparatifs de décomposition thermique qui sont commentés à l'exemple 1,
- les figures 4 et 5 sont des micrographies des grains d'oxalate mixte et d'oxyde obtenus à l'exemple 2,
- la figure 6 est un diagramme densité/surface spécifique commenté à l'exemple 2,
- la figure 7 est un diagramme obtenu à l'exemple 2 donnant l'évolution de la densification en fonction de la pression appliquée lors de la compaction,
- les figures 8 et 9 sont des diagrammes obtenus aux exemples 3 et 5 donnant l'évolution de la densification en fonction de la température de frittage.

EXEMPLE 1 : Fabrication d'une poudre d'oxyde de zinc dopée de composition molaire 90 % Zn, 5 % Bi, 3 % Co, 2 % Mn.

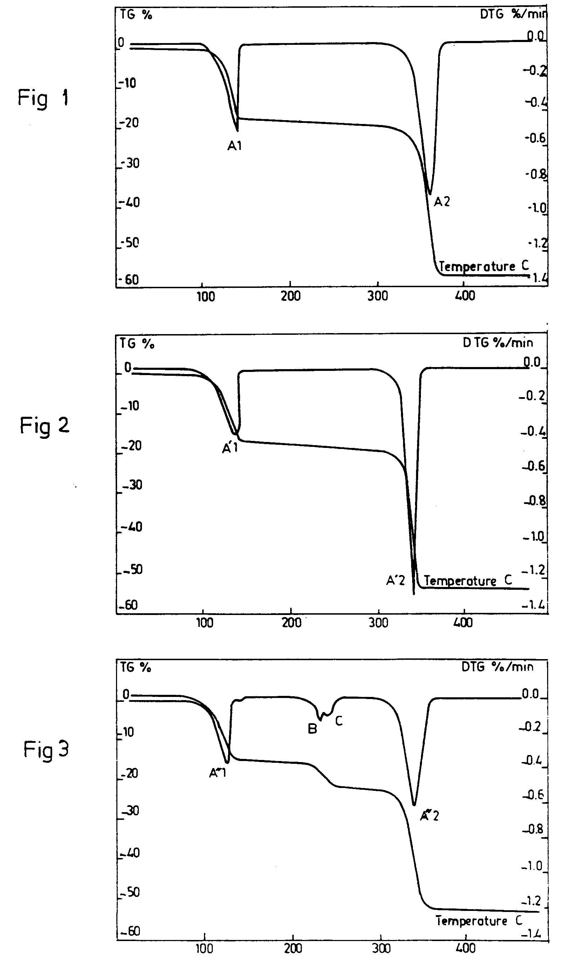

Cet exemple est destiné à montrer que le procédé de l'invention permet de fabriquer un précurseur constitué par un oxalate mixte, même dans le cas de teneurs très importantes en dopants (teneurs très supérieures à celles généralement utilisées pour la fabrication des varistances).
a/ - On dissout 12,26 g de ZnCl₂ ; 0,714 g de CoCl₂, 6H₂O ; 0,396 g de MnCl₂, 4H₂O ; et 1,576 g de BiCl₃ dans 25 ml d'eau distillée à 20° C. La concentration totale en sels est de l'ordre de 4 mole/l.
b/ - On dissout 7,105 g d'oxalate d'ammonium dans 220 ml d'eau distillée à 20° C. La concentration est de l'ordre de 0,2 mole/l. Cette solution qui sera mélangée à froid est désignée "solution froide d'oxalate".
   On dissout 7,105 g d'oxalate d'ammonium dans 130 ml d'eau distillée à 60° C. La concentration est de l'ordre de 0,4 mole/l. Cette solution est désignée "solution chaude d'oxalate".
c/ - On mélange rapidement la solution de sel de zinc issue de a/ et la solution froide d'oxalate issue de b/. On observe la formation d'un précipité, on agite à température ambiante pendant 45 secondes.
   On mélange rapidement la solution issue de c/ et la solution chaude d'oxalate issue de b/. On observe une seconde précipitation, on agite pendant un quart d'heure en maintenant le mélange à 35° C. Le pH du mélange est de l'ordre de 6.
d/ - On filtre le précipité et on le lave à l'eau jusqu'à ce que les eaux de lavage ne contiennent plus d'ions chlorure ou ammonium. On sèche le précipité à l'étuve à température inférieure à 50° C pendant 24 heures. Il est ensuite désaggloméré et tamisé.
   Cette poudre est analysée par dosage (fluorescence X), afin de confirmer les teneurs nominales des dopants. Le composé formé est un oxalate mixte monophasé de formule : Zn_{0,90}Bi_{0,05}Co_{0,03}Mn_{0,02}C₂O₄, 2H₂O.
   Le caractère mixte et monophasé de ce composé a été mis en évidence par analyse thermique gravimétrique (ATG) et par calorimétrie (DSC). La figure 1 est un diagramme caractérisant la décomposition thermique de l'oxalate de zinc pur ; la figure 2 est un diagramme similaire caractérisant la décomposition thermique de l'oxalate mixte préparé ; la figure 3 est un diagramme similaire caractérisant la décomposition thermique d'un mélange d'oxalates, oxalate de zinc, oxalate de bismuth, oxalate de manganèse, oxalate de cobalt (mélange dans lequel les cations métalliques sont présents dans les mêmes proportions que dans l'oxalate mixte préparé). La température est portée en abscisse, la perte de masse en % (TG) et la dérivée de la perte de masse (DTG) sont portées en ordonnées.
   La décomposition de l'oxalate de zinc pur se traduit par un signal A₁ vers 140° C qui correspond à la perte des deux molécules d'eau et un signal A₂ vers 360° C qui correspond à la perte d'une mole de CO et une mole de CO₂ (figure 1).
   Le signal A₂ se retrouve avec un décalage vers les basses températures dans la décomposition de l'oxalate mixte (A'₂ ; figure 2) alors que le signal A₁ reste inchangé A'₁.
   Au contraire, la décomposition du mélange d'oxalate se traduit par 4 signaux, A''₁ qui correspond à la perte d'eau et reste inchangé, A''₂ correspondant à la décomposition de l'oxalate de zinc vers 360° C, B et C qui correspondent respectivement à la décomposition de l'oxalate de Co et de Mn vers 235° C, et à la décomposition de l'oxalate de Bi et de Mn vers 245° C.
   La comparaison de ces courbes permet d'affirmer que l'oxalate coprécipité est un oxalate mixte monophasé, par opposition à un mélange d'oxalates.
e/ - La poudre d'oxalate mixte obtenue est chauffée jusqu'à la température de palier de 400° C. La vitesse de montée en température est de 30° C/heure ; le temps de palier à 400° C est de 1 heure ; la vitesse de refroidissement est ensuite de 200° C/h.

La surface spécifique de la poudre d'oxyde de zinc dopé obtenue, mesurée par la méthode B.E.T. ("Brunauer Emmett Teller"), est de 40 m²/g.

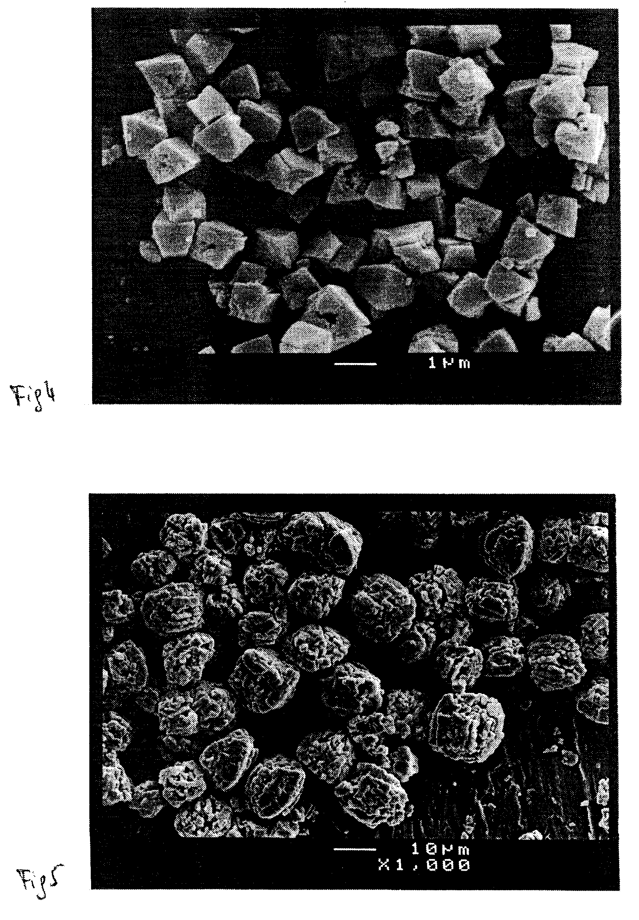

EXEMPLE 2 : Fabrication d une poudre d'oxyde de zinc de composition molaire 97 % Zn, 1 % Bi, 1 % Co, 1 % Mn présentant une taille moyenne de grains d'environ 1,5 µm.
a/ - On dissout 13,22 g de ZnCl₂ ; 0,238 g de CoCl₂, 6H₂O ; 0,198 g de MnCl₂, 4H₂O ; et 0,315 g de BiCl₃ dans 25 ml d'eau distillée à 20° C. La concentration totale en sels est de l'ordre de 4 mole/l.
b/ - On dissout 7,105 g d'oxalate d'ammonium dans 220 ml d'eau distillée à 20° C. La concentration est de l'ordre de 0,2 mole/l (solution dite froide).
   On dissout 7,105 g d'oxalate d'ammonium dans 130 ml d'eau distillée à 60° C. La concentration est de l'ordre de 0,4 mole/l (solution dite chaude).
c/ - On mélange rapidement les solutions issues de a/ et de b/ (solution froide). On observe la formation d'un précipité, on agite à température ambiante pendant 45 secondes.
   On mélange rapidement les solutions issues de c/ et de b/ (solution chaude). On observe une seconde précipitation, on agite pendant un quart d'heure en maintenant le mélange à 35° C. Le pH du mélange est de l'ordre de 6.
d/ - On filtre le précipité et on le lave à l'eau jusqu'à ce que les eaux de lavage ne contiennent plus d'ions chlorure ou ammonium. On sèche le précipité à l'étuve à température inférieure à 50° C pendant 24 heures. Il est ensuite désaggloméré et tamisé.
   Cette poudre est analysée par dosage (fluorescence X), afin de confirmer les teneurs nominales des dopants. Le composé formé est un oxalate mixte monophasé de formule : Zn_{0,97}Bi_{0,01}Co_{0,01}Mn_{0,01}C₂O₄, 2H₂O.
   Le caractère mixte et monophasé de ce composé a été mis en évidence par analyse thermique gravimétrique (ATG) et par calorimétrie (DSC).
   Les grains d'oxalate mixte ont été observés au microscope électronique à balayage, la figure 4 est une micrographie de ces grains qui sont isotropes de forme polyédrique et de diamètre moyen 1,5 µm.
e/ - La poudre obtenu d'oxalate mixte de zinc, bismuth, cobalt, manganèse est chauffée jusqu'à une température de palier variant entre 400° C (fin de décomposition 380° C) et 700° C (fusion dans le diagramme ZnO-Bi₂O₃ d'un eutectique vers 740° C). La vitesse de montée en température est de 30° C/h jusqu'à 400° C puis de 100° C/h jusqu'à la température de palier. La vitesse de refroidissement est de 200° C/h. La température et le temps de palier permettent de fixer la surface spécifique de l'oxyde obtenu qui peut évoluer entre 5 m²/g et 45 m²/g.
   Les poudres d'oxyde obtenues sont analysées. Elles sont constituées de particules isotropes de forme polyédrique, de diamètre équivalent moyen D₅₀ égal à 1 micromètre environ. Chaque particule de poudre est constituée d'un agrégat de grains primaires de taille variant entre 0,01 et 0,3 micromètre (figure 5).
f/ - Chacune des poudres d'oxyde de zinc dopé de surface spécifique donnée est mélangée avec 1 % d'un liant à base de latex puis pressée de façon uniaxiale sous forme de pastilles de diamètre 6 mm et d'épaisseur 2 mm. La pression utilisée est de 280 MPa.

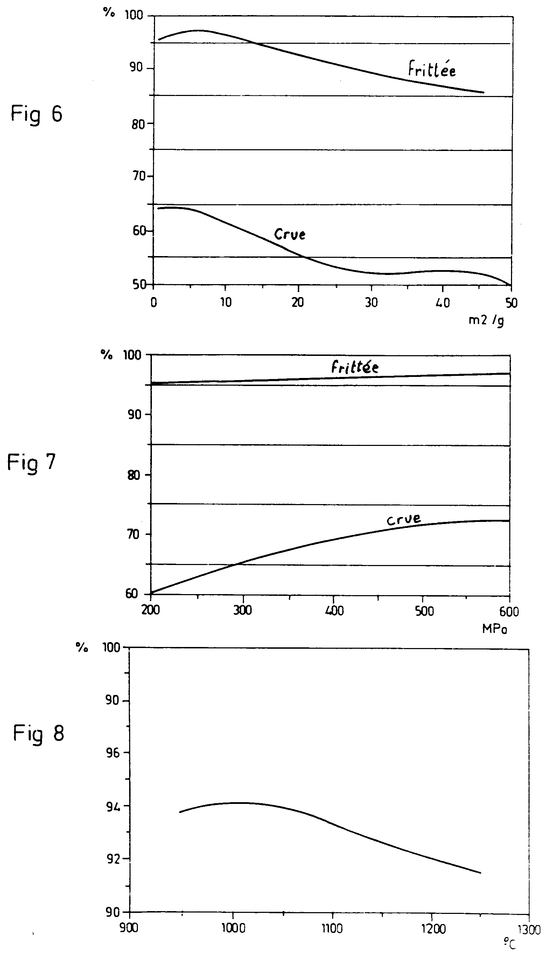

La densification de la céramique crue varie entre 52 % et 64,5 % selon la surface spécifique de l'oxyde (entre 45 et 1 m²/g) (figure 6).

Ces pastilles sont frittées à 950° C pendant 10 h. La vitesse de montée en température est de 7° C/min, sauf entre 250° C et 400° C où la vitesse de montée en température est de 1° C/min pour permettre l'élimination du liant. La densification est de 85,5 % pour une poudre de 45 m²/g, mais elle atteint 91 % pour une poudre de 28 m²/g et 97,5 % pour une surface spécifique de 6,5 m²/g, pour le cycle de frittage annoncé (figure 6). Ces densifications peuvent encore être nettement améliorées en modifiant des paramètres tels que le cycle de frittage (vitesse de montée, temps de palier...), la pression exercée lors de la mise en forme, la teneur et la nature du liant introduit. Les conditions choisies dans ce cas semblent être optimales pour une poudre de surface spécifique de 6,5 m²/g, mais ne le sont donc pas pour les autres. Ainsi, la figure 7 présente l'évolution de la densité relative des céramiques crues (64,5 % à 72 %) réalisées à partir d une poudre de 1 m²/g, en fonction de la pression exercée. Un gain de 8 % peut être obtenu en doublant la pression exercée, alors que la proportion de liant reste constante. De plus, ceci se traduit par une augmentation de la densification au frittage qui passe de 95,6 à 97 %, sans apparition de fissures.

De même, le cycle de frittage et la teneur en liant peuvent être optimisés pour une poudre de surface spécifique très importante (45 m²/g). L'aptitude à l'écrasement de ces particules permet d'obtenir des densifications importantes, sans emploi de procédés de granulation généralement employés pour la mise en forme de poudres fines obtenues par voie chimique.

EXEMPLE 3 : Evolution de la densification d'une poudre d'oxyde de zinc dopé en fonction de la température de frittage.

La poudre d'oxalate mixte fabriquée à l'exemple 2, est chauffée sous air jusqu'à la température de 700° C, pendant 1 heure, selon le cycle de calcination énoncé dans l'exemple 2 e. La surface spécifique de l'oxyde de zinc dopé obtenu est de 14 m²/g.

Cette poudre est pressée dans les mêmes conditions que dans l'exemple 2 f.

Les pastilles obtenues sont frittées à différentes températures comprises entre 950 et 1250° C. Le temps de palier à la température de frittage est de une heure. La figure 8 présente l'évolution de la densification en fonction de la température de frittage. On constate que la densification présente un maximum de 94 % dès 1000° C, cette courbe permet donc de mettre en évidence l'intérêt de cette poudre pour le frittage à basse température.

Ce procédé permet donc de contrôler la composition, la répartition des dopants, la taille, la forme et la texture des particules, tout en présentant une facilité d'obtention (précipitation simple, produits courants et peu chers). Il en résulte une facilité de mise en oeuvre, une bonne aptitude au frittage à basse température, ce qui permet de diminuer les temps d'élaboration des céramiques par rapport aux procédés industriels utilisés actuellement.

EXEMPLE 4 : Fabrication d'une poudre d'oxyde de zinc dopé de composition molaire 97 % Zn, 1 % Bi, 1 % Co, 1 % Mn présentant une taille de grains d'environ 10 µm.
a/ - On dissout 13,22 g de ZnCl₂ ; 0,238 g de CoCl₂, 6H₂O ; 0,198 g de MnCl₂, 4H₂O ; et 0,315 g de BiCl₃ dans 500 ml d'eau distillée chauffée à 45° C. La concentration totale en sels est de l'ordre de 0,2 mole/l.
b/ - On dissout 14,21 g d'oxalate d'ammonium dans 500 ml d'eau distillée à 20° C. La concentration est de l'ordre de 0,2 mole/l.
c/ - On mélange rapidement les solutions issues de a/ et de b/. On observe la formation instantanée d un précipité, on agite pendant une demi-heure en maintenant le mélange à 35° C. Le pH du mélange est de l'ordre de 6.
d/ - On filtre le précipité et on le lave à l'eau jusqu'à ce que les eaux de lavage ne contiennent plus d'ions chlorure ou ammonium. On sèche le précipité à l'étuve à température inférieure à 50° C pendant 24 heures. Il est ensuite désaggloméré et tamisé.
   Cette poudre est analysée par dosage (fluorescence X), afin de confirmer les teneurs nominales des dopants. Le composé formé est un oxalate mixte monophasé de formule : Zn_{0,97}Bi_{0,01}Co_{0,01}Mn_{0,01}C₂O₄, 2H₂O.
   Le caractère mixte et monophasé de ce composé a été mis en évidence par analyse thermique gravimétrique (ATG) et par calorimétrie (DSC).
   Les grains d'oxalate mixte ont été observés au microscope électronique à balayage, la figure 8 est une micrographie de ces grains qui sont isotropes de forme polyédrique de diamètre moyen 10 µm.
e/ - Cette poudre est décomposée thermiquement conformément à l'exemple 1 e, mais à une température de palier de 700° C, pour obtenir une poudre d'oxyde de zinc dopé de surface spécifique égale à 12 m²/g et de densification égale à 92 %, à la température de frittage de 950° C. Les particules de forme polyédrique ont des diamètres moyens D₅₀ de 9 micromètres environ.

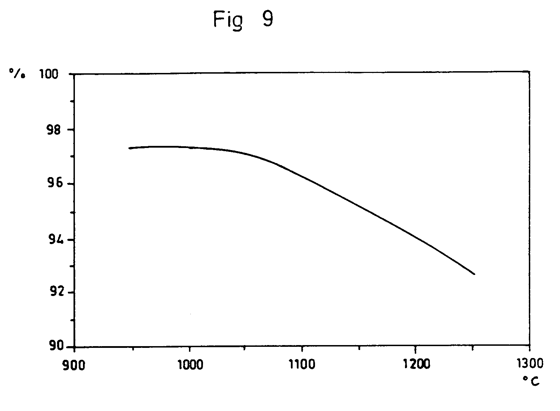

EXEMPLE 5 : Fabrication d'une poudre d'oxalate mixte de composition molaire 95 % Zn, 1 % Bi, 1 % Co, 1 % Mn, 2 % Sb présentant une taille moyenne de grains d'environ 1,5 µm.
a/ - On dissout 113,04 g de Zn(NO₃)₂, 6H₂O ; 1,164 g de Co(NO₃)₂,6H₂O ; 1,148 g de Mn(NO₃)₂,6H₂O ; et 1,9483 g de Bi(NO₃)₃,5H₂O dans 100 ml d'eau distillée à 20° C. La concentration totale en sels est de l'ordre de 4 moles/l.
b/ - On dissout 28,42 g d'oxalate d'ammonium dans 880 ml d eau distillée à 20° C. La concentration est de l'ordre de 0,2 mole/l.
c/ - On dissout 28,42 g d'oxalate d'ammonium dans 880 ml d'eau distillée à 20° C. La concentration est de l'ordre de 0,2 mole/l.
d/ - On ajoute une solution aqueuse contenant 1,8249 g de SbCl₃ avant précipitation.
e/ - On mélange rapidement les solutions issues de a/ et de b/. On observe la formation d'un précipité, on agite à température ambiante pendant 45 secondes.
f/ - On mélange rapidement les solutions issues de e/ et de c/. On observe une seconde précipitation, on agite pendant un quart d'heure en maintenant le mélange à 20° C. Le pH du mélange est de l'ordre de 6.
g/ - On filtre le précipité et on le lave à l'eau jusqu'à ce que les eaux de lavage ne contiennent plus d'ions nitrate ou ammonium. On sèche le précipité à l'étuve à température inférieure à 50° C pendant 24 heures. Il est ensuite désagrégé et tamisé. Cette poudre est analysée par dosage (fluorescence X), afin de confirmer les teneurs nominales des dopants. Le composé formé est un oxalate mixte monophasé de formule : Zn_{0,97} Bi_{0,01} Co_{0,01} Mn_{0,01} Sb_{0,02} C₂O_{4,} 2H₂O.
   Le caractère mixte et monophasé de ce composé a été mis en évidence par analyse thermique gravimétrique (ATG) et par calorimétrie (DSC).
   Les grains d'oxalate mixte ont été observés au microscope électronique à balayage et sont identiques à ceux de l'exemple 2.
h/ - La poudre d'oxalate mixte obtenue est chauffée sous air jusqu'à la température de 700° C, pendant 5 heures, selon le cycle de calcination énoncé dans l'exemple 3. La surface spécifique de l'oxyde de zinc dopé obtenu est de 20 m²/g.
i/ - Cette poudre est pressée dans les mêmes conditions que dans l'exemple 3.
j/ - Les pastilles obtenues sont frittées à différentes températures comprises entre 950 et 1250° C. Le temps de palier à la température de frittage est de une heure. La figure 9 montre l'évolution de la densification en fonction de la température de frittage. On constate que la densification présente un maximum de 97 % dès 950° C : cette courbe permet donc de mettre en évidence l'intérêt de cette poudre pour le frittage à basse température.

EXEMPLE 6 : Fabrication d'une poudre de formiate mixte de composition molaire 97 % Zn, 1 % Bi, 1 % Co, 1 % Mn.
a/ - On dissout 57,71 g de Zn(NO₃)₂,6H₂O ; 0,582 g de Co(NO₃)₂,6H₂O ; 0,574 g de Mn(NO₃)₂,6H₂O ; et 0,974 g de Bi(NO₃)₃,5H₂O dans 50 ml d'eau distillée à 20° C. La concentration totale en sels est de l'ordre de 4 moles/l.
b/ - On dissout 25,224 g de formiate d'ammonium dans 150 ml d'eau distillée à 20° C. La concentration est de l'ordre de 2,7 mole/l.
c/ - On mélange a/ dans b/.
d/ - On ajoute 1,5 l d'éthanol dans la solution issue de c/, un précipité apparaît, on agite pendant un quart d'heure.
e/ - On filtre le précipité et on le lave à l'eau jusqu'à ce que les eaux de lavage ne contiennent plus d'ions nitrate ou ammonium. On sèche le précipité à l'étuve à température inférieure à 50° C pendant 24 heures. Il est ensuite désagrégé et tamisé.
f/ - La poudre de formiate mixte est chauffée sous air jusqu'à la température de 600° C, pendant une heure, selon le cycle de calcination de l'exemple 3. La surface spécifique de l'oxyde de zinc dopé obtenu est de 10 m²/g.
g/ - Cette poudre est pressée dans les mêmes conditions que dans l'exemple 3.
h/ - Les pastilles obtenues sont frittées à 950° C avec deux heures de palier, selon le cycle de frittage de l'exemple 3. La densification obtenue dans ces conditions est de 94 %.

EXEMPLE 7 : Fabrication d'une poudre de citrate mixte de composition molaire 97 % Zn, 1 % Bi, 1 % Co, 1 % Mn.
a/ - On dissout 57,71 g de Zn(NO₃)₂,6H₂O ; 0,582 g de Co(NO₃)₂,6H₂O ; 0,574 g de Mn(NO₃)₂,6H₂O ; et 0,974 g de Bi(NO₃)₃,5H₂O dans 50 ml d'eau distillée à 20° C. La concentration totale en sels est de l'ordre de 4 moles/l.
b/ - On dissout 30,128 g de di ammonium hydrogénocitrate dans 200 ml d'eau distillée à 20° C. La concentration est de l'ordre de 0,7 mole/l.
c/ - On mélange a/ dans b/.
d/ - On ajoute 1 l d'éthanol dans la solution issue de c/, un précipité apparaît, on agite pendant un quart d'heure.
e/ - On filtre le précipité et on le lave à l'eau jusqu'à ce que les eaux de lavage ne contiennent plus d'ions nitrate ou ammonium. On sèche le précipité à l'étuve à température inférieure à 50° C pendant 24 heures. Il est ensuite désaggloméré et tamisé.
f/ - La poudre de citrate mixte est chauffée sous air jusqu'à la température de 600° C, pendant une heure, selon le cycle de calcination énoncé dans l'exemple 3. La surface spécifique de l'oxyde de zinc dopé obtenu est de 10 m²/g.
g/ - Cette poudre est pressée dans les mêmes conditions que dans l'exemple 3.
h/ - Les pastilles obtenues sont frittées à 950° C avec deux heures de palier, selon le cycle de frittage énoncé dans l'exemple 3. La densification obtenue dans ces conditions est de 91 %.

EXEMPLE 8 : Fabrication d'une poudre de tartrate mixte de composition molaire 97 % Zn, 1 % Bi, 1 % Co, 1 % Mn.
a/ - On dissout 298,65 g de Zn(NO₃)₂,6H₂O ; 3,01 g de Co(NO₃)₂,6H₂O ; 2,95 g de Mn(NO₃)₂,6H₂O ; et 5,02 g de Bi(NO₃)₃,5H₂O dans 250 ml d'eau distillée à 20° C. La concentration totale en sels est de l'ordre de 4 moles/l.
b/ - On dissout 184,15 g de tartrate d'ammonium dans 1 000 ml d'eau distillée à 45° C. La concentration est de l'ordre de 1 mole/l.
c/ - On mélange b/ dans a/, le précipité est agité pendant un quart d'heure.
e/ - On filtre le précipité et on le lave à l'eau jusqu'à ce que les eaux de lavage ne contiennent plus d'ions nitrate ou ammonium. On sèche le précipité à l'étuve à température inférieure à 90° C pendant 24 heures. Il est ensuite désaggloméré et tamisé.
f/ - La poudre de tartrate mixte est chauffée sous air jusqu'à la température de 700° C, pendant deux heures, selon le cycle de calcination énoncé dans l'exemple 3. La surface spécifique de l'oxyde de zinc dopé obtenu est de 8 m²/g.
g/ - Cette poudre est pressée dans les mêmes conditions que dans l'exemple 3.
h/ - Les pastilles obtenues sont frittées à 950° C avec deux heures de palier, selon le cycle de frittage énoncé dans l'exemple 3. La densification obtenue dans ces conditions est de 91 %.

## Revendications

1. Poudre d'oxyde de zinc dopé, constituée par un oxyde de zinc dopé au bismuth et comportant éventuellement un ou plusieurs autres dopants métalliques ou semi-métalliques, se caractérisant, à la fois, par une surface spécifique comprise entre 5 et 45 m²/g et une densification au moins égale à 90 % pour des températures de frittage comprises entre 950° et 1 000° C.

2. Poudre d'oxyde de zinc dopé selon la revendication 1, constituée de particules isotropes de diamètre équivalent moyen D₅₀ compris entre 0,4 et 20 micromètres, chaque particule étant constituée de grains primaires de taille comprise entre 0,01 et 0,3 micromètre.

3. Procédé de fabrication d'une poudre d'oxyde de zinc dopé, consistant (a) à préparer au moyen d'un solvant, une solution d'un sel de zinc soluble dans ledit solvant et à ajouter à ladite solution un sel ou un hydroxyde de bismuth et, le cas échéant, un sel ou un hydroxyde d'un ou plusieurs autres éléments de dopage métalliques ou semi-métalliques, en proportion relative minoritaire par rapport au zinc, (b) à préparer au moins une solution aqueuse contenant un agent précipitant, avec le cas échéant un ou des éléments de dopage métalliques ou semi-métalliques, (c) à mélanger les solutions préparées aux opérations (a) et (b) en vue d'engendrer une précipitation, (d) à séparer le précipité de la phase liquide, (e) et à décomposer ledit précipité par un traitement thermique, ledit procédé étant caractérisé en ce que :
(b) on utilise comme solution d'agent précipitant, une solution contenant des ions oxalates, formiates, citrates, acétates, tartrates, en vue d'engendrer lors du mélange (c) la précipitation d'un précurseur constitué par un oxalate, formiate, citrate, acétate, ou tartrate mixte monophasé de zinc et de dopants, de formule générale Zn_{(n-x-y)}Biₓ D_{y} Rm , zH₂O , dans lequel des atomes de bismuth Bi et éventuellement d'autres dopants D sont substitués à des atomes de zinc Zn, R étant un radical oxalate, formiate, citrate, acétate ou tartrate, n et m des entiers, et x et y des nombres petits devant n et m,
(e) on réalise le traitement thermique de l'oxalate, formiate, citrate, acétate, ou tartrate mixte monophasé de zinc dans des conditions appropriées pour obtenir un oxyde de zinc dopé, de morphologie semblable à celle du précurseur mixte monophasé.

4. Procédé selon la revendication 3, caractérisé en ce que : (a) on prépare une solution aqueuse ou alcoolique de sel de zinc soluble de concentration molaire comprise entre 2 et 6 moles/litre, (b) on prépare au moins une solution aqueuse contenant des ions oxalates en vue d'engendrer lors du mélange (c) la précipitation d'un oxalate mixte monophasé de zinc et de dopants, de formule générale Zn _{(1-x-y)} Biₓ D_{y} C₂ O₄ , zH₂O.

5. Procédé selon la revendication 4, caractérisé en ce qu'on maintient la solution d'oxalate à une température comprise entre 20° C et 80° C avant de la mélanger à la solution de sel de zinc.

6. Procédé selon l'une des revendications 4 ou 5, dans lequel (c) le mélange de la solution d'oxalate issue de l'opération (b) est effectuée dans des conditions proches des conditions stoechiométriques de façon que le nombre d'ions oxalates soit sensiblement égal à la somme des ions métalliques ou semi-métalliques.

7. Procédé selon l'une des revendications 4, 5, ou 6, caractérisé en ce que (b) on prépare deux solutions d'oxalate de concentration comprise entre 0,1 et 1 mole par litre, (c) on mélange la solution de sel de zinc en l'ajoutant d'abord à une des solutions d'oxalate, puis après agitation, on ajoute la seconde solution d'oxalate en maintenant la température du mélange à une valeur comprise entre 20° C et 60° C.

8. Procédé selon la revendication 7, caractérisé en ce que (c) l'on verse rapidement la solution de sel de zinc dans la première solution d'oxalate, on agite le mélange pendant une durée comprise entre 15 et 120 secondes, on verse rapidement la seconde solution d'oxalate, et on agite le nouveau mélange entre 10 et 60 minutes en le maintenant à une température comprise entre 20° C et 60° C.

9. Procédé selon l'une des revendications 4 à 8, dans lequel (d) on sépare le précipité d'oxalate mixte par une filtration, suivie d'au moins un lavage à l'eau.

10. Procédé selon l une des revendications 4 à 9, dans lequel (b) on utilise une ou des solutions d'oxalate d'ammonium.

11. Procédé selon l une des revendications 4 à 10, dans lequel (a) on prépare une solution aqueuse contenant du chlorure de zinc ou du nitrate de zinc.

12. Procédé selon l une des revendications 4 à 11, caractérisé en ce que (e) le traitement thermique consiste à chauffer lentement l'oxalate mixte avec une vitesse de montée en température au plus égale à 100° C/heure pour amener le produit à une température comprise entre 380° C et 710° C, cette température étant maintenue pendant une durée comprise entre 0,5 et 20 heures.

13. Céramique crue fabriquée par compactage à froid à partir d'une poudre conforme à l'une des revendications 1 ou 2.

14. Céramique crue selon la revendication 13, se caractérisant par une densification comprise entre 50 et 70 %.

15. Céramique fabriquée par compactage et frittage à chaud à partir d'une poudre conforme à l'une des revendications 1 ou 2.

16. Céramique selon la revendication 15, fabriquée par frittage entre 740° et 1000° C, se caractérisant par une densification au moins égale à 90 %.

## Claims

1. Doped zinc-oxide powder, constituted by a zinc oxide doped with bismuth and possibly comprising one or several other metallic or semi-metallic doping agents, characterised both by specific surface between 5 and 45 m²/g and, at sintering temperatures between 950° and 1,000° C, at least 90 % densification.

2. Zinc-oxide powder doped according to Claim 1, constituted by isotropic particles with a mean equivalent diameter D₅₀ between 0.4 and 20 micrometres, each particle being constituted by primary grains with a size between 0.01 and 0.3 micrometre.

3. Process for manufacturing a doped zinc-oxide powder, consisting (a) in preparing, by means of a solvent, a solution of a zinc salt which is soluble in said solvent and in adding to said solution a salt or a hydroxide of bismuth and, if required, a salt or a hydroxide of one or several other metallic or semi-metallic doping agents, the proportion of which is smaller than the proportion of zinc, (b) in preparing at least one aqueous solution containing a precipitating agent with, if required, one or more metallic or semi-metallic doping elements, (c) in mixing the solutions prepared in operations (a) and (b) with a view to bringing about precipitation, (d) in separating the precipitate from the liquid phase, (e) and in decomposing said precipitate by a thermal treatment, said process being characterised in that:
(b) use is made by way of precipitating-agent solution of a solution containing oxalate, formate, citrate, acetate or tartrate ions with a view to bringing about, at the mixing stage (c), the precipitation of a precursor constituted by a monophase mixed oxalate, formate, citrate, acetate or tartrate of zinc and doping agents with the general formula Zn_{(n-x-y)}BiₓD_{y}Rm , zH₂O, in which atoms of bismuth Bi and possibly of other doping agents D are substituted for atoms of zinc Zn, R being an oxalate, formate, citrate, acetate or tartrate radical, n and m are integers and x and y small numbers less than n and m,
(e) the thermal treatment of the mixed monophase oxalate, formate, citrate, acetate or tartrate of zinc is carried out under conditions appropriate for obtaining a doped zinc oxide with a morphology similar to that of the mixed monophase precursor.

4. Process according to Claim 3, characterised in that: (a) an aqueous or alcoholic solution is prepared of soluble zinc salt with a molar concentration between 2 and 6 moles/litre, (b) at least one aqueous solution is prepared containing oxalate ions with a view to bringing about in the course of mixing (c) the precipitation of a mixed monophase oxalate of zinc and doping agents having the general formula Zn_{(1-x-y)}BiₓD_{y}C₂O₄ , zH₂O.

5. Process according to Claim 4, characterised in that the oxalate solution is maintained at a temperature between 20° C and 80° C prior to admixing it to the zinc-salt solution.

6. Process according to one of Claims 4 or 5, in which (c) mixing of the oxalate solution resulting from operation (b) is effected under conditions close to stoichiometric conditions so that the number of oxalate ions is substantially equal to the sum of the metallic or semi-metallic ions.

7. Process according to one of Claims 4, 5 or 6, characterised in that (b) two oxalate solutions are prepared having a concentration between 0.1 and 1 mole per litre, (c) the zinc-salt solution is mixed, said solution being initially added to one of the oxalate solutions, whereupon the second oxalate solution is added after stirring, the temperature of the mixture being maintained at a value between 20° C and 60° C.

8. Process according to Claim 7, characterised in that (c) the zinc-salt solution is rapidly poured into the first oxalate solution, the mixture is stirred for between 15 and 120 seconds, the second oxalate solution is rapidly added by pouring, and the new mixture is stirred for between 10 and 60 minutes while maintaining it at a temperature between 20° C and 60° C.

9. Process according to one of Claims 4 to 8, in which (d) the mixed oxalate precipitate is separated by filtration followed by at least one operation of washing with water.

10. Process according to one of Claims 4 to 9, in which (b) use is made of one or more ammonium-oxalate solutions.

11. Process according to one of Claims 4 to 10, in which (a) an aqueous solution is prepared containing zinc chloride or zinc nitrate.

12. Process according to one of Claims 4 to 11, characterised in that (e) the thermal treatment consists in slowly heating the mixed oxalate at a rate of temperature increase not exceeding 100° C/h so as to raise the temperature of the product to a value between 380° C and 710° C, said temperature being maintained for between 0.5 and 20 hours.

13. Raw ceramic product manufactured by cold compacting of a powder according to one of Claims 1 or 2.

14. Raw ceramic product according to Claim 13, characterised by a densification ratio amounting to between 50 and 70 %.

15. Ceramic product manufactured by compacting and hot sintering of a powder according to one of Claims 1 or 2.

16. Ceramic product according to Claim 15 manufactured by sintering, at a temperature between 740° and 1 000° C, characterised by a densification ratio amounting to at least 90 %.

## Patentansprüche

1. Dotiertes Zinkoxidpulver, bestehend aus einem mit Wismut dotierten und möglicherweise einen oder mehrere andere metallische oder halbmetallische Dotierstoffe umfassenden Zinkoxid, gekennzeichnet sowohl durch eine spezifische Oberfläche zwischen 5 und 45 m²/g und eine Verdichtung, die bei Sintertemperaturen zwischen 950° und 1 000° C mindestens 90 % entspricht.

2. Pulver aus dotiertem Zinkoxid nach Anspruch 1, bestehend aus isotropen Teilchen mit einem mittleren äquivalenten Durchmesser D₅₀ zwischen 0,4 und 20 Mikrometern, wobei jedes Teilchen aus primären Körnchen mit einer Größe zwischen 0,01 und 0,3 Mikrometer besteht.

3. Verfahren zur Herstellung eines Pulvers aus dotiertem Zinkoxid, bestehend (a) in der Zubereitung mit Hilfe eines Lösungsmittels einer Lösung eines löslichen Zinksalzes in dem besagten Lösungsmittel und im Zusetzen eines Wismutsalzes oder eines Wismuthydroxids und gegebenenfalls eines Salzes oder eines Hydroxids von einem oder mehreren anderen metallischen bzw. halbmetallischen Dotierelementen in im Verhältnis zu dem Zink relativ kleinerem Anteil zu der besagten Lösung, (b) im Zubereiten von mindestens einer wässerigen Lösung, umfassend ein Fällungsmittel mit gegebenenfalls einem oder mehreren metallischen bzw. halbmetallischen Dotierelementen, (c) im Mischen der in den Operationen (a) und (b) zubereiteten Lösungen zwecks Bewirkung eines Fällungsvorgangs, (d) im Trennen des Niederschlags von der flüssigen Phase, (e) und im Zersetzen des besagten Niederschlags durch eine Wärmebehandlung, wobei das besagte Verfahren dadurch gekennzeichnet ist:
(b) daß als Fällungsmittellösung von einer Lösung Gebrauch gemacht wird, die Oxalat-, Formiat-, Citrat-, Acetat- oder Tartrationen enthält, um während der Mischoperation (c) die Fällung eines aus einem gemischten einphasigen Oxalat, Formiat, Citrat, Acetat oder Tartrat von Zink und Dotierstoffen mit der allgemeinen Formel Zn_{(n-x-y)}BiₓD_{y}Rm , zH₂O bestehenden Zwischenstoffes zu bewirken, in dem Wismutatome und möglicherweise Atome anderer Dotierelemente D für Zinkatome Zn substituiert sind, R ein Oxalat-, Formiat-, Citrat-, Acetat- oder Tartratradikal ist, n und m ganze Zahlen sind und x und y im Vergleich mit n und m kleine Zahlen sind.
(e) daß die Wärmebehandlung des gemischten einphasigen Oxalats, Formiats, Citrats, Acetats oder Tartrats von Zink unter Bedingungen durchgeführt wird, die zur Erzielung eines dotierten Zinkoxids ähnlicher Morphologie wie der des gemischten einphasigen Zwischenstoffs geeignet sind.

4. Verfahren nach Anspruch 3, dadurch gekennzeichnet: (a) daß eine wässerige oder alkoholische Lösung von löslichem Zinksalz mit einer Molarkonzentration zwischen 2 und 6 Mol/Liter zubereitet wird, (b) daß mindestens eine Oxalationen enthaltende wässerige Lösung zubereitet wird, um während des Mischens (c) die Fällung eines gemischten einphasigen Oxalats von Zink und Dotierelementen mit der allgemeinen Formel Zn_{(1-x-y)}BiₓD_{y}C₂O₄ , zH₂O zu bewirken.

5. Verfahren nach Anspruch 4, dadurch gekennzeichnet, daß die Oxalatlösung vor dem Zumischen zu der Zinksalzlösung bei einer Temperatur zwischen 20° C und 80° C erhalten wird.

6. Verfahren nach einem der Ansprüche 4 oder 5, bei dem (c) das Mischen der in der Operation (b) angefallenen Oxalatlösung unter Bedingungen durchgeführt wird, die nahezu stöchiometrischen Bedingungen entsprechen, so daß die Anzahl der Oxalationen im wesentlichen der Summe der metallischen bzw. halbmetallischen Ionen gleich ist.

7. Verfahren nach einem der Ansprüche 4, 5 oder 6, dadurch gekennzeichnet, daß (b) zwei Oxalatlösungen mit einer Konzentration zwischen 0,1 und 1 Mol pro Liter zubereitet werden, (c) die Zinksalzlösung nach anfänglichem Zusatz zu einer der Oxalatlösungen gemischt und dann nach Rühren die zweite Oxalatlösung zugesetzt wird, wobei man die Temperatur des Gemisches auf einem Wert zwischen 20° C und 60° C erhält.

8. Verfahren nach Anspruch 7, dadurch gekennzeichnet, daß (c) die Zinksalzlösung schnell in die erste Oxalatlösung geschüttet, das Gemisch während einer Zeitspanne zwischen 15 und 120 Sekunden gerührt, die zweite Oxalatlösung schnell zugeschüttet und das neue Gemisch zwischen 10 und 60 Minuten lang gerührt wird, wobei man es bei einer Temperatur zwischen 20° C und 60° C erhält.

9. Verfahren nach einem der Ansprüche 4 bis 8, bei dem (d) der Niederschlag von gemischtem Oxalat durch eine Filteroperation, auf die mindestens eine Waschung mit Wasser folgt, abgeschieden wird.

10. Verfahren nach einem der Ansprüche 4 bis 9, bei dem (b) von einer oder mehreren Ammoniumoxalatlösungen Gebrauch gemacht wird.

11. Verfahren nach einem der Ansprüche 4 bis 10, bei dem (a) eine Zinkchlorid oder Zinknitrat enthaltende wässerige Lösung zubereitet wird.

12. Verfahren nach einem der Ansprüche 4 bis 11, dadurch gekennzeichnet, daß (e) die Wärmebehandlung im langsamen Erwärmen des gemischten Oxalats bei einer 100° C/Stunde nicht überschreitenden Temperaturanstiegsgeschwindigkeit besteht, um das Produkt auf eine Temperatur zwischen 380° C und 710° C zu erhitzen, wobei die besagte Temperatur während einer Zeitspanne zwischen 0,5 und 20 Stunden beibehalten wird.

13. Durch Kaltverdichtung eines Pulvers nach einem der Ansprüche 1 oder 2 hergestellter keramischer Rohstoff.

14. Keramischer Rohstoff nach Anspruch 13, gekennzeichnet durch ein Verdichtungsverhältnis zwischen 50 und 70 %.

15. Durch Verdichtung und Warmsinterung aus einem Pulver nach einem der Ansprüche 1 oder 2 hergestellter keramischer Stoff.

16. Keramischer Stoff nach Anspruch 15, hergestellt durch Sinterung bei einer Temperatur zwischen 740° und 1 000° C, gekennzeichnet durch ein Verdichtungsverhältnis von mindestens 90 %.
